# EUROPEAN PATENT SPECIFICATION

(11) **EP 1 834 867 B1**
(45) Date of publication and mention of the grant of the patent: **30.04.2014**
(21) Application number: 07000130.0
(22) Date of filing: 04.01.2007
(51) Int. Cl.: B62J 6/20, B62K 5/007

(54) **Small vehicle**
Kleinfahrzeug
Véhicule compact

(30) Priority: 14.03.2006 JP 2006069570
(43) Date of publication of application: 19.09.2007
(73) Proprietor: HONDA MOTOR CO., LTD., Tokyo 107-8556 (JP)
(72) Inventor: Ichikawa, Katsuhisa, Wako-shi Saitama 351-0193 (JP); Nagaoka, Masatoshi, Wako-shi Saitama 351-0193 (JP); Minato, Kazuhiro, Wako-shi Saitama 351-0193 (JP); Yamagishi, Masahiko, Wako-shi Saitama 351-0193 (JP)
(74) Representative: Herzog, Markus

(56) References cited:
- EP-A2- 1 544 036
- WO-A1-03/024769
- GB-A- 2 397 808
- GB-A- 2 410 931
- JP-A- 2003 190 224

## Description

### BACKGROUND OF THE INVENTION

### FIELD OF THE INVENTION

The present invention relates to a small vehicle such as an electric wheelchair capable of traveling on a sidewalk and suitable for use by the elderly and the like, and particularly relates to an improvement of a small vehicle comprising: a vehicle body frame; a front wheel and a rear wheel suspended on a front part and a rear part, respectively, of the vehicle body frame; a handle column mounted on the front part of the vehicle body frame; a steering handle which is steerably supported by the handle column and capable of turning the front wheel; a step floor formed behind the handle column and on the vehicle body frame; and a driver' s seat supported by the vehicle body frame in the rear part of the step floor.

### DESCRIPTION OF THE RELATED ART

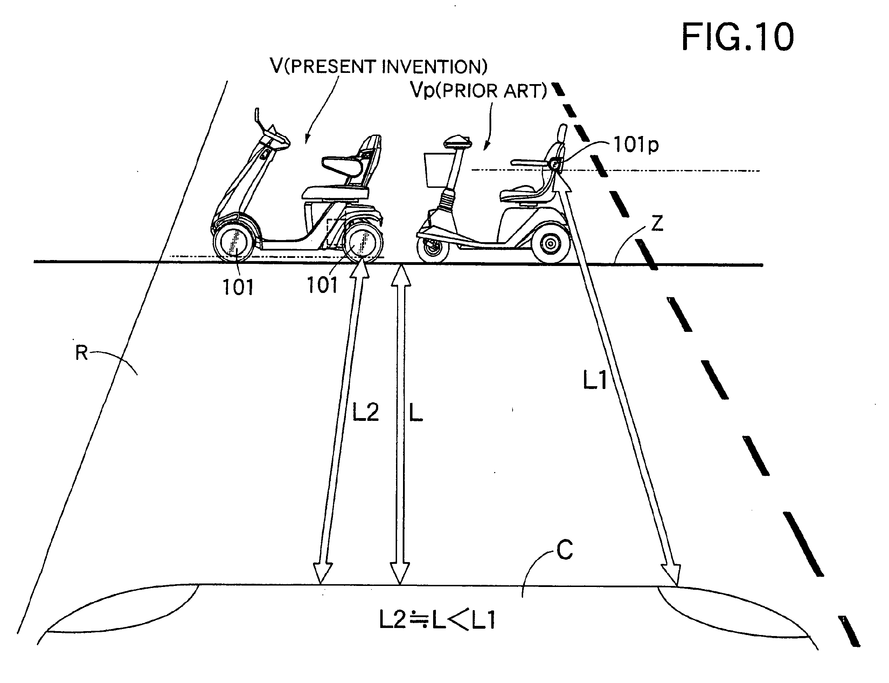

It has been known that such a small vehicle Vp capable of traveling on a sidewalk has a reflector 101p provided on the side surface at the base of an armrest of a seat in order to cause existence of the small vehicle Vp to be recognized by a driver of another vehicle C such as an automobile traveling on a driveway R when the small vehicle Vp crosses the driveway R, in such a case where the small vehicle Vp passes through a pedestrian crossing Z, as shown in FIG. 10 (see, for example, Japanese Utility Model Registration No. 2579373).

Generally, when an automobile is traveling at night, particularly in darkness, a driver of the automobile uses the position of a reflector on the side surface of a small vehicle which most intensely attracts the driver' s attention, as a decision criterion for determining a distance between the automobile and the small vehicle on a pedestrian crossing in the front.

Thus, in FIG. 10, when the conventional small vehicle Vp having the reflector 101p provided on the side surface of the armrest which is significantly distant from the ground is passing through a pedestrian crossing Z at night as described above, the driver of the automobile C traveling on a driveway R toward the small vehicle may mistake an apparent distance L1 between the automobile and the reflector 101p of the small vehicle Vp on the pedestrian crossing Z for a distance between the automobile and the small vehicle Vp under the effect of perspective perception. In this case, there is a significant difference between the apparent distance L1 and the actual distance L between the automobile and the small vehicle Vp. Eventually, the driver tends to erroneously determine that the small vehicle Vp exists farther away than it does. This is not preferable in terms of visibility of a small vehicle on a pedestrian crossing.

GB 2 397 808 A, on which the preamble of claim 1 is based, shows a scooter having a series of LEDs on each side frame thereof.

JP 2003 190224 A shows a small vehicle of similar type to which the present invention is directed, but no light reflectors on the side surfaces.

WO 03/024769 A1 shows a bicycle with electro-luminescent panels mounted to side surfaces of frame pipes, but not to wheels.

EP 1 544 036 A2 shows a spoke-type vehicle wheel, having at least one array of LEDs mounted radially to one spoke of the wheel. Such LED arrays may be mounted on a wheel rim on one or more locations toward the outer circumference of the wheel rim. A plurality of LED arrays are distributed over the circumference surface of a wheel tire.

GB 2 410 931 A shows a foldable scooter.

The present invention has been achieved in view of such respects, and its object is to provide a small vehicle of high visibility which has its position correctly recognized by a driver of another vehicle traveling on a driveway when the small vehicle crosses the driveway at night, with attention given to an illusionary phenomenon found in the perspective perception.

### SUMMARY OF THE INVENTION

In order to achieve the above object, according to a first feature of the present invention, there is provided a small vehicle in accordance with claim 1. The small vehicle comprises: a vehicle body frame; a front wheel and a rear wheel suspended on the front part and the rear part, respectively, of the vehicle body frame; a handle column mounted on the front part of the vehicle body frame; a steering handle which is steerably supported by the handle column and capable of turning the front wheel; a step floor formed behind the handle column and on the vehicle body frame; and a driver's seat supported by the vehicle body frame in the rear part of the step floor, wherein lower reflectors or light emitters arranged longitudinally are provided in a portion of a side surface of the vehicle, which is close to the ground.

With the first feature of the present invention, the reflectors or light emitters arranged longitudinally are provided in a portion of the side surface of the small vehicle that is close to the ground, and thus even if a driver of another vehicle on a road (mistakenly) determines an apparent distance between the driver's vehicle and the reflectors or light emitters to be a distance between the driver ' s vehicle and the small vehicle under the effect of perspective perception when the driver recognizes the reflectors or light emitters of the small vehicle crossing the driveway at night, the error between the apparent distance and the actual distance between the driver's vehicle and the small vehicle can be made so small as to be negligible in actuality. Therefore, the visibility of the small vehicle can be improved by the lower reflectors or light emitters so that its position can be more correctly recognized.

.

According to a second feature of the present invention, in addition to the first feature, the portion provided with the lower reflectors or light emitters is a lower end portion of a side surface of a vehicle body.

With the second feature of the present invention, the lower reflectors or light emitters provided in the portion of the body of the small vehicle close to the ground do not move with respect to the vehicle body, thus improving the visibility of the side surface of the small vehicle by a small number of lower reflectors or light emitters.

According to a third feature of the present invention, in addition to any of the first to third features, upper reflectors or light emitters arranged longitudinally are provided on an upper part of a side surface of the vehicle body.

With the third feature of the present invention, the lower reflectors or light emitters arranged longitudinally and the upper reflectors or light emitters arranged longitudinally cause a driver of another vehicle to accurately recognize the size of the small vehicle at night, thus further improving the visibility of the small vehicle. Moreover, a large number of reflectors or light emitters exist, whereby even of some of them are shielded by something, the visibility of the side surface thereof is not significantly deteriorated.

The above-mentioned object, other objects, characteristics, and advantages of the present invention will become apparent from a preferred embodiment, which will be described in detail below by reference to the attached drawings.

### BRIEF DESCRIPTION OF THE DRAWINGS

FIG. 1 is a perspective view of a small vehicle according to an embodiment of the present invention.
FIG. 2 is a front view of the small vehicle.
FIG. 3 is a side view of the small vehicle.
FIG. 4 is a side view showing a vehicle body frame of the small vehicle.
FIG. 5 is a plane view showing the vehicle body frame.
FIG. 6 is a sectional view taken along line 6-6 of FIG. 3.
FIG. 7 is a sectional view taken along line 7-7 of FIG. 3.
FIG. 8 is a sectional view taken along line 8-8 of FIG. 7.
FIG. 9 is a sectional view taken along line 9-9 of FIG. 7.
FIG. 10 is a view for comparison of visibility between the small vehicle of the present invention and a conventional small vehicle.
FIG. 11 is a view corresponding to FIG. 3, showing another embodiment of the present invention.

### DESCRIPTION OF THE PREFERRED EMBODIMENT

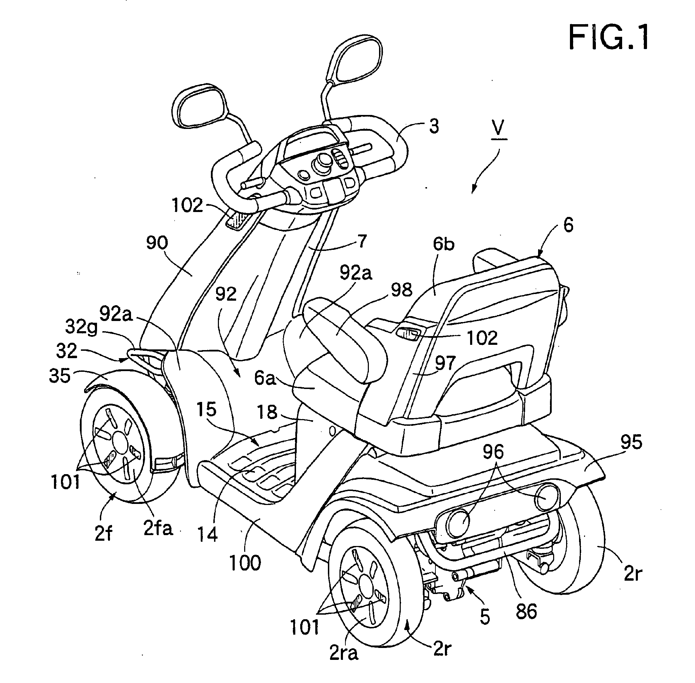

In FIGS. 1 to 5, a small vehicle V comprises: a vehicle body frame 1; a pair of left and right front wheels 2f and 2f suspended on the front end portion of the vehicle body fame 1 such that they can be turned; a steering handle 3; a steering mechanism 4 transmitting the movement of the steering handle 3 to the front wheels 2f and 2f; a power unit 5 suspended on the rear end portion of the vehicle body frame 1; a pair of left and right rear wheels 2r and 2r supported and driven by the power unit 5; a driver's seat 6; and a vehicle body cover such as a leg shield 7. These componennts will be described one by one in detail below. In the description below, the "left/right" and "front/rear" refer to positions with respect to the small vehicle V.

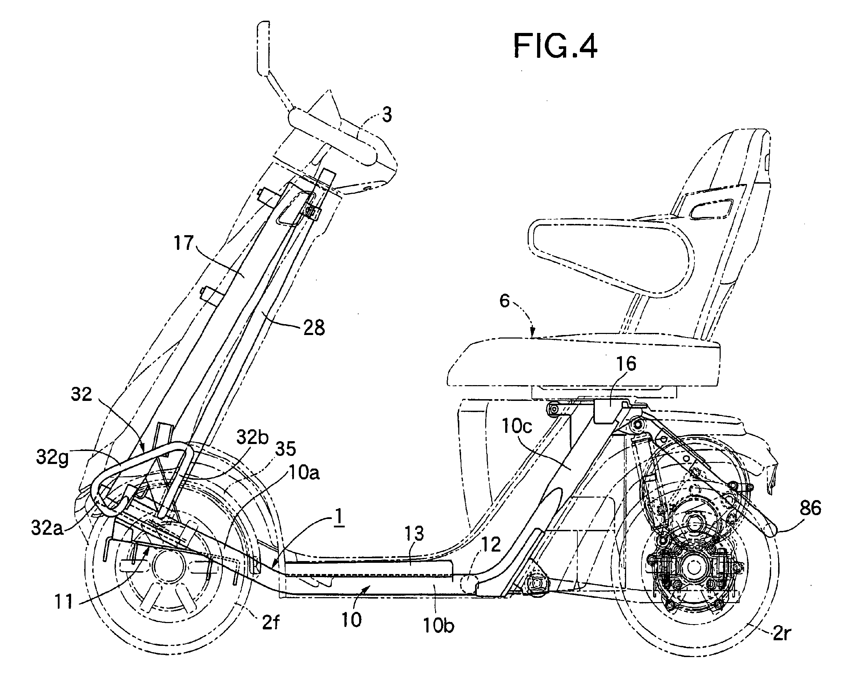

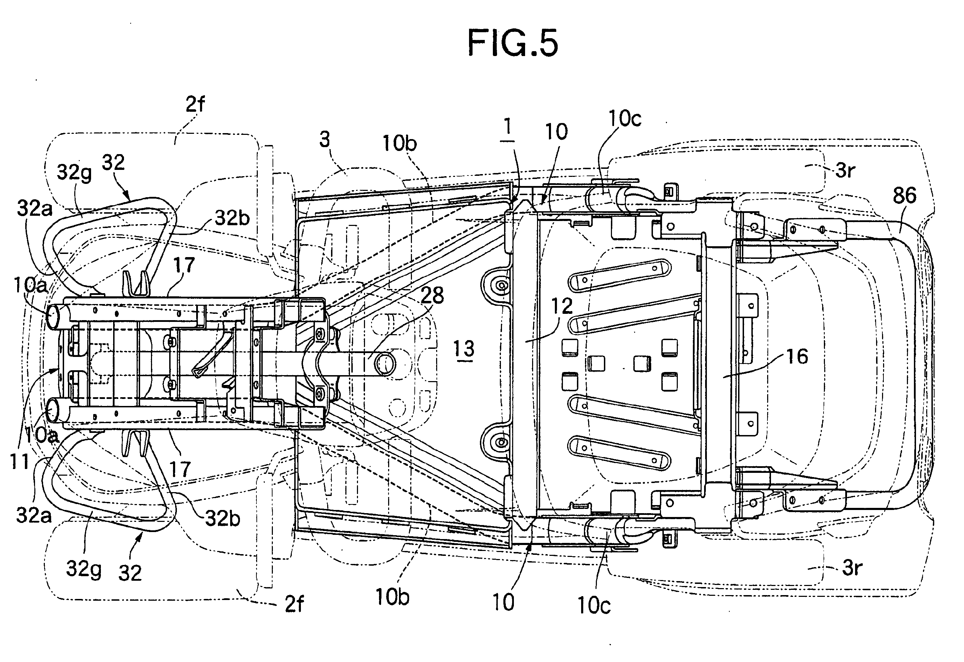

First, the vehicle body frame 1 has pipe-shaped main frames 10 which are arranged side by side and spaced apart from each other, as shown in FIGS. 4 and 5. Each main frame 10 comprises: a frame front portion 10a obliquely extending backward and downward from the front end; a frame middle portion 10b horizontally extending backward from the rear end of the frame front portion 10a; and a frame rear potion 10c obliquely extending backward and upward from the rear end of the frame middle portion 10b. The frame front portions 10a of both the main frames 10 are arranged in parallel to each other. The frame middle portions 10b are arranged such that a space therebetween is increasing backward. The frame rear portions 10c are arranged in parallel to each other. Welded to the frame front portions 10a is a sub-frame 11 made of a steel plate for coupling these portions to each other. Welded to the rear ends of the frame middle portions 10b is a pipe-shaped cross member 12 for coupling these portions to each other. Welded to the upper parts of the frame middle portions 10b is a square floor panel 13 for coupling these portions to each other. Welded to the upper ends of the frame rear portions 10c is a seat rail 16 for coupling these portions to each other. Welded to the front end portions of the frame front portions 10a are the lower end portions of a pair of left and right columns 17 slightly slanting backward. The vehicle body frame 1 is formed as described above.

The driver's seat 6 is mountedon the seat rail 16. An auxiliary housing box 18 containing auxiliaries such as a battery 19 is mounted between the frame rear portions 10c for receiving the auxiliaries from the front face side.

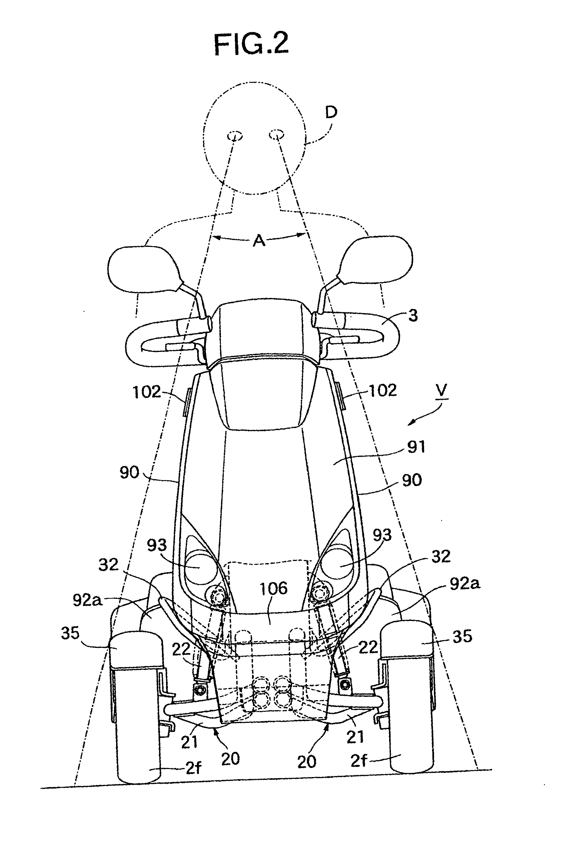

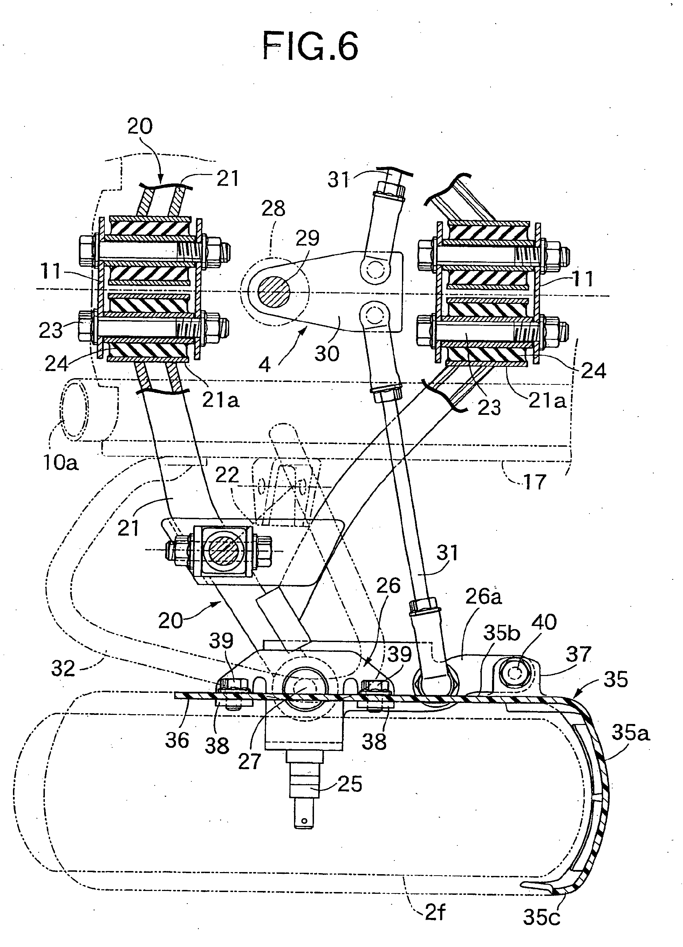

As shown in FIGS. 2, 3 and 6, left and right front wheels 2f and 2f are independently suspended on the sub-frame 11 via front suspension devices 20 and 20, respectively. Each front suspension device 20 comprises an A-type front suspension arm 21 forked longitudinally into two branches on the inner end side, and an expandable and shrinkable front dumper 22 . In the front suspension arm 21, a pair of front and rear boss portions 21a and 21a at the inner end are supported via elastic bushes 24 and 24 by a pair of left and right pivots 23 and 23 fixedly provided on the sub-frame 11 and extending longitudinally so that the front suspension arm 21 can swing up and down about the pivots 23 and 23. The front dumper 22 buffering the up-and-down swing of the front suspension arm 21 is coupled between each front suspension arm 21 and the column 17 on the same side.

A knuckle 26 having an axle 25 rotatably supporting the front wheel 2f on the side same as the front suspension arm 21 is turnably coupled via a king pin 27 to the outer end, that is, the extremity of swing of the front suspension arm 21.

A hand column 28 supported by the sub-frame 11 and the left and right columns 17 and 17 is placed at the central part between both the columns 17 and 17. The steering handle 3 placed above the hand column 28 is operable in association with the left and right knuckles 26 and 26 via the steering mechanism 4.

The steering mechanism 4 comprises: a steering shaft 29 rotatably supported by the steering handle 3 and coupled to the steering handle 3 at the upper end portion; a steering arm 30 formed integrally with the lower end portion of the steering shaft 29 and extending rearward of the shaft 29; and a pair of left and right tie rods 31 and 31 coupling the steering arm 30 to knuckles 26a and 26a of the left and right knuckles 26 and 26. The knuckle arm 26a extends from the lower end portion of the knuckle 26 rearward of the king pin 27, and can rotate about the king pin 27 according to the steering of the steering handle 3 to turn the left and right front wheels 2f and 2f.

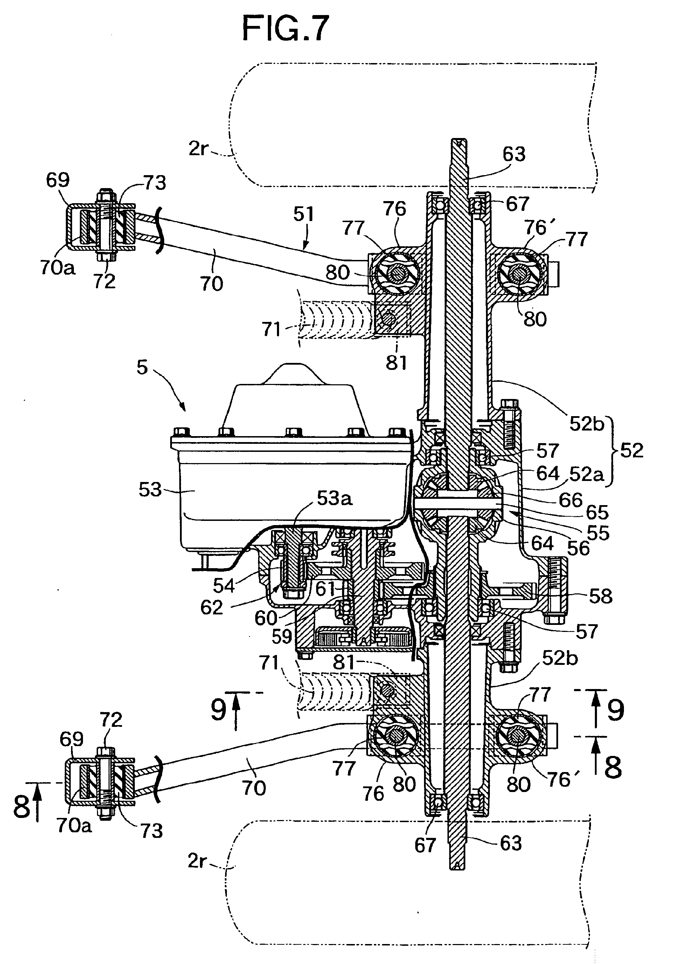

As shown in FIGS. 1, 2, 6 and 7, a movable fender 35 covering substantially the upper semicircle surface of the front wheel 2f is placed above each front wheel 2f . The movable fender 35 is mounted on the corresponding knuckle 26 in the manner described below so that it can be turned integrally with the corresponding front wheel 2f. Namely, the movable fender 35 is made of a synthetic resin, and formed by integrally jointing an arcuate peripheral wall portion 35a covering the upper part of the outer peripheral surface of the front wheel 2f, an inner side wall portion 35b covering the upper part of the inner side surface of the front wheel 2f, and an outer side wall portion 35c covering the upper peripheral edge of the outer side surface of the front wheel 2f . A vertical first mounting portion 36 is formed at the central part of the inner side wall portion 35b. A horizontal second mounting portion 37 is formed at the rear end part of the inner side wall portion 35b. A pair of front and rear brackets 38 and 38 rises from the upper end of the knuckle 26. The first mounting portion 36 is fastened to the brackets 38 and 38 by bolts 39 and 39. The second mounting portion 37 is fastened to the knuckle arm 26a by a bolt 40. By removing the bolts 39 and 40, the movable fender 35 can be removed from the knuckle 26.

The left and right movable fenders 35 and 35 are arranged such that at least the front end portion thereof falls within a visual field A of a driver D seated on the seat 6 (see FIG. 2).

The driver D can accurately confirm the position and direction of the front wheels 2f and 2f on the road by viewing the movable fenders 35 and 35 which are turned along with the left and right front wheels 2f and 2f when driving the small vehicle V, and therefore can easily operate on a bad road or at a narrow corner.

Moreover, the movable fenders 35 and 35 only requires a relatively small area for covering only the top of the front wheels 2f and 2f, and therefore can contribute to a reduction in the width of the vehicle body as compared to fenders formed so as to widely cover the turning front wheels, such as conventional front fenders integral with the vehicle body of the small vehicle. Thus, pedestrians are prevented from being intimidated when the vehicle is traveling on a pedestrian crossing.

The movable fenders 35 can easily be mounted by bolting the first and second mounting portions 36 and 37 of the inner side wall portion 35b to the brackets 38 and 38 and the knuckle arm 26a of the knuckle 26 axially supporting the front wheel 2f, and the simultaneous turning of the front wheels 2f and 2f of the movable fenders 35 and 35 can be performed reliably.

Further, since each movable fender 35 can be singly attached to and detached from the knuckle 26, only the movable fender 35 can be replaced by a new fender independently of other members at the time when it is damaged, thus reducing the maintenance costs.

In FIGS. 1 and 4 to 6, disposed on both left and right sides of the front part of the vehicle body frame 1 is a pair of left and right guard members 32 and 32 surrounding the front dumper 22 on the same side and extending above the front wheels 2f and 2f on the same side. Each guard member 32 is made by bending a pipe material into a loop-shape, specifically formed into a loop including a linear grip portion 32g extending in the longitudinal direction, and a pair of front and rear leg portions 32a and 32b extending downward in a curve from the opposite ends of the grip portion 32g. Each guard member 32 is supported by the vehicle body frame 1 by fixing the rear leg portion 32b to the outer side surface of the frame front portion 10a of the main frame 10 and fixing the front leg portion 32a to the outer side surface of the column 17 on the same side by bolts or the like, respectively. Both the leg portions 32a and 32b are arranged obliquely with the outer end faced upward so that they pass through both the front and rear sides of the front dumper 22 and pass through a space between a front cover 91 and a front side cover 90 and a space between the leg shield 7 and the front wheel 2f. The grip portion 32g is situated above the front wheel 2f and the movable fender 35. The front cover 91, the front side cover 90 and the leg shield 7 are made of a synthetic resin.

The left and right guardmembers 32 and 32 canprevent an obstacle such as a fallen object from entering inside the front cover 91 and a space between the front wheels 2f and 2f, and protect the movable fender 35, the front wheel 2f, the front dumper 22 and the like against the obstacle.

The grip portion 32g of each guard member 32 is exposed above the movable fender 35, and therefore when an assistant lifts the front part of the small vehicle V, the grip portion 32g can easily be held without being obstructed by the front cover 91 or the other parts, thus improving the workability of lifting. Since the grip portion 32g is placed above the movable fender 35, the movable fender 35 catches muddy water splashed by the front wheel 2f to prevent the grip portion 32g from being smeared with muddy water, and therefore the assistant does not get dirt on the hand. Thus, the burden on the assistant at the time of lifting the front part of the small vehicle V is reduced.

Further, since both the leg portions 32a and 32b of the guard member 32 are fixed on the vehicle body frame 1, the guard member 32 obtains such a high support strength so as to sufficiently withstand a lifting load.

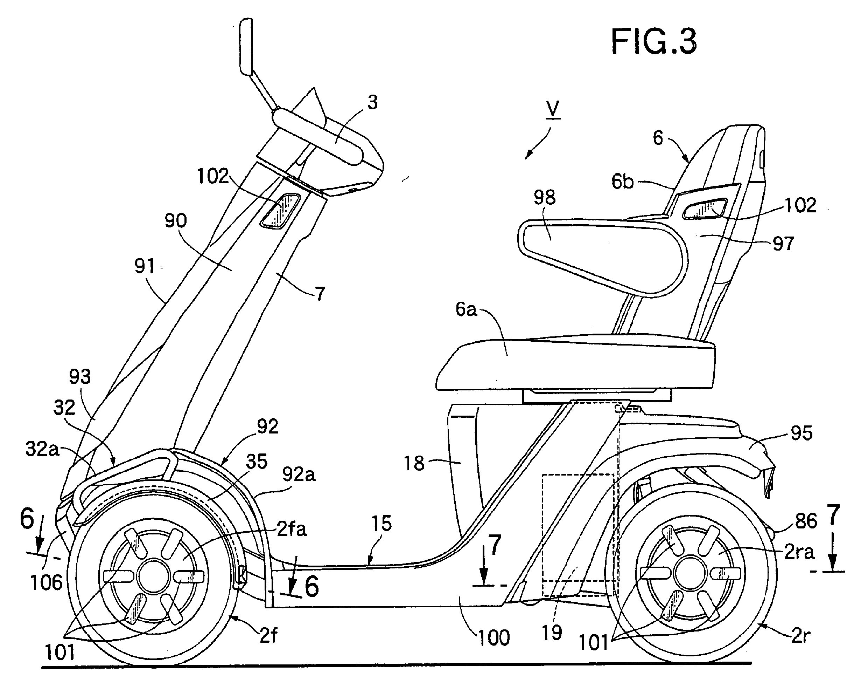

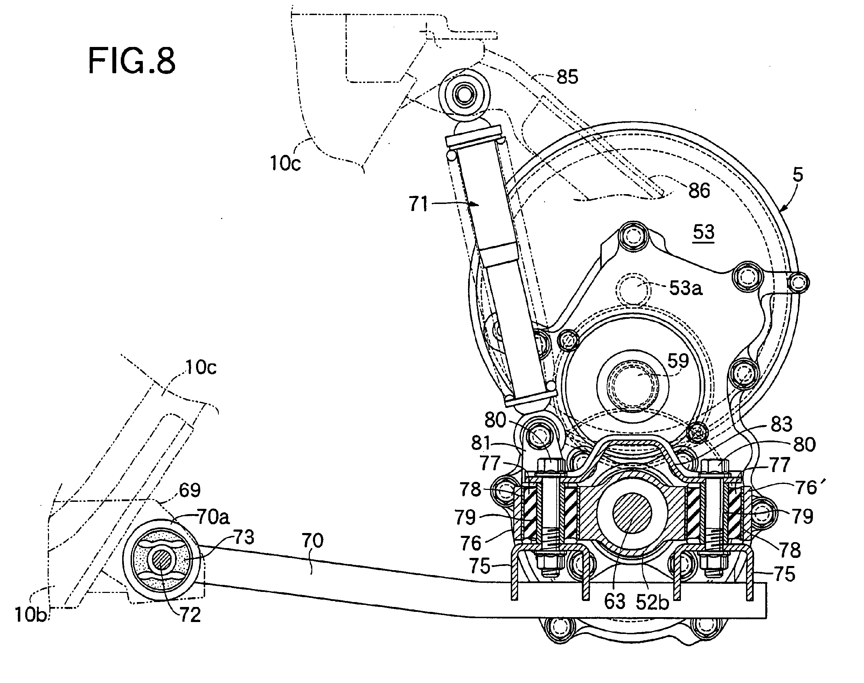

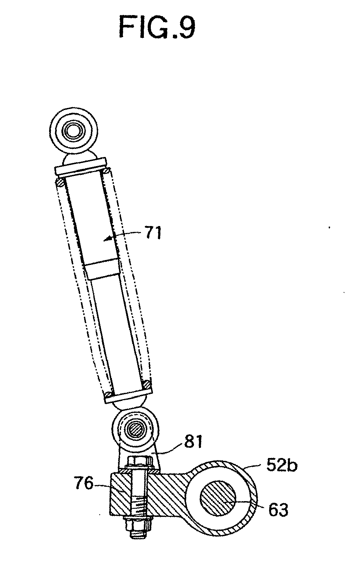

In FIGS. 3 and 7 to 9, the power unit 5 is suspended at the rear part of the main frame 10 via a rear suspension device 51, and supports a pair of left and right rear wheels 2r and 2r. A casing 52 of the power unit 5 consists of a reduction case 52a and a pair of left and right axle cases 52b and 52b projectingly provided integrally with left and right side walls in the lower part of the reduction case 52a. An electric motor 53 using the battery 19 as a power source is mounted on one side of the upper part of the reduction case 52a. An output shaft 53a of the electric motor 53 is placed such that a pinion gear 54 formed at its leading end portion protrudes into the reduction case 52a.

In the reduction case 52a, a differential case 56 of a differential device 55 is placed coaxially with the left and right axle cases 52b and 52b, and its left and right end portions are rotatably supported by the reduction case 52a via ball bearings 57 and 57 . A final gear 58 having a large diameter is spline-coupled to the differential case 56. In the reduction case 52a, an intermediate transmission shaft 59 is placed at a middle part between the output shaft 53a and the axle cases 52b and 52b, and its left and right end portions are rotatably supported by the reduction case 52a. A large-diameter gear 60 meshed with the pinion gear 54 and a small-diameter gear 61 meshed with the final gear 58 are fixedly provided on the intermediate transmission shaft 59. The pinion gear 54, the large-diameter gear 60, the small-diameter gear 61 and the final gear 58 form a speed reduction device 62 which transmits the rotation of the output shaft 53a of the electric motor 53 to the differential case 56 at a certain reduction ratio.

Left and right rear axle shafts 63 and 63 extending through the left and right axle cases 52b and 52b are relatively rotatably supported by the inner peripheral surface at the opposite end portions of the differential case 56. Side gears 64 and 64 are spline-coupled to the inner end portions of the rear axle shafts 63 and 63 protruding into the differential case 56. Mounted on the differential case 56 is a pinion shaft 65 orthogonally crossing the axis of rotation of the differential case 56, and a pair of pinion gears 66 and 66 meshed with both the side gears 64 and 64 is rotatably supported by the pinion shaft 65. The differential case 56, the pinion gears 66 and 66 and the side gears 64 and 64 form the differential device 55 distributing the rotation of the final gear 58 to the rear axle shafts 63 and 63.

The left and right rear axle shafts 63 and 63 are supported by the outer end portions of the left and right axle cases 52b and 52b via ball bearings 67 and 67. The left and right rear wheels 2r and 2r are integrally mounted on the leading end portions of the left and right rear axle shafts 63 and 63 protruding from the outer ends of the left and right axle cases 52b and 52b. Therefore, the rear wheels 2r and 2r are supported by the axle cases 52b and 52b via the rear axle shafts 63 and 63.

The rear suspension device 51 is constituted by a pair of left and right rear suspension arms 70 and 70, and a pair of left and right expandable and contractible rear dumpers 71 and 71. Each rear suspension arm 70 has a boss portion 70a at its front end supported via a front elastic bush 73 by a pivot 72 fixed on a bracket 69 at the rear end portion of the frame middle portion 10b and extending in the lateral direction, and can swing up and down about the pivot 72.

A pair of front and rear support pads 75 and 75 is fixedly provided by welding at the rear end portion of each rear suspension arm 70. A pair of front and rear support arms 76 and 76' placed above these support pads 75 and 75 is projectingly provided on the front and rear surfaces of the axle case 52b on the same side. Rear elastic bushes 77 and 77 having vertical axes are provided on these support arms 76 and 76' in the manner described below.

Namely, in each rear elastic bush 77, an outer cylinder 78 and an inner cylinder 79 that are mutually concentrically placed are attached by baking on its inner and outer peripheral surfaces. The outer cylinders 78 and 78 of the front and rear rear elastic bushes 77 and 77 are pressed into the support arms 76 and 76', respectively. The inner cylinders 79 and 79 of the front and rear rear elastic bushes 77 and 77 are fixedly held between the support pads 75 and a pressing plate 83 via bolts 80 and 80 extending through the inner cylinders.

In the above-described structure, each front elastic bush 73 is formed such that the elastic modulus in the vertical direction is lower than the elastic modulus in the left/right direction. Each rear elastic bush 77 is formed such that the elastic modulus in the left/right direction is lower than the elastic modulus in the front/rear direction.

A bracket 81 rising upward is fixed on each support arm 76 on the front side, and the opposite end portions of the rear dumper 71 are coupled to the bracket 81 and the upper end portion of the frame rear portion 10c.

A reactive force torque acting on the casing 52 when the rear wheels 2r and 2r are driven by the output of the power unit 5 is transmitted to and received by the rear suspension arm 70 via a pair of front and rear rear elastic bushes 77 and 77, the bolts 80 and 80 and the support pads 75 and 75 from the support arms 76 and 76' of the axle case 52b. In the meantime, the impact of the reactive force torque is appropriately alleviated by elastic deformation of the front and rear rear elastic bushes 77 and 77. However, since the rear elastic bushes 77 and 77 are arranged longitudinally with the rear axle shaft 63 held therebetween and can sufficiently exert a resistance against the reactive force torque, and since the elastic modulus of these rear elastic bushes 77 in the longitudinal direction is set relatively high, the support rigidity of the power unit 5 can be improved, and therefore excessive swing of the entire power unit 5 by the reactive force torque can be suppressed to accurately transmit motive power to the rear wheels 2r and 2r.

A pair of rear dumpers 71 and 71 coupled to the left and right support arm portions 76 and 76 on the front side of the axle cases 52b and 52b also acts so as to resist the reactive force torque of the power unit 5, thus contributing to enhancement of the support rigidity of the power unit 5.

When different impact forces are applied to the left and right rear wheels 2r and 2r from the road surface when the small vehicle V is traveling, the axle cases 52b and 52b relatively easily tilts so as to turn upward a side receiving a larger impact force from the road surface, and accordingly, the left and right rear suspension arms 70 and 70 are swung relatively up and down, whereby the left and right rear wheels 2r and 2r can ascend and descend separately, so that grounding characteristic of each rear wheel 2r can be improved, thus contributing to an improvement in riding comfort. Particularly, setting relatively small the elastic modulus of each rear elastic bush 77 in the lateral direction is effective in promoting the relative swing of the left and right rear suspension arms 70 and 70 to further improve the grounding characteristic of each rear wheel 2r.

Even if the rear wheels 2r and 2r undergo a lateral load at the time of turning, a pair of front and rear two sets of left and right rear elastic bushes 77 and 77; 77 and 77 can co-operate to exert a sufficient resistance, and therefore the lateral support rigidity of the rear wheels 2r and 2r can be improved to stabilize the posture of the rear wheels 2r and 2r.

This rear suspension device 51 can be provided inexpensively because of its simple structure and easy assembly.

In FIGS. 1 and 3 to 5, a pair of left and right fourth brackets 85 and 85 obliquely protruding downward is welded to the upper endportion of the frame rear portion 10c. The opposite endportions of a U-shaped rear bumper 71 surrounding the electric motor 53 of the power unit 5 is fixed to the fourth brackets 85 and 85 by a bolt 87. The rear bumper 71 plays a role of preventing damage to the electric motor 53 by an obstacle in the rear, and can be used as a grip when lifting the rear part of the small vehicle V and as a stopper portion for a tool holding the small vehicle V on a carrier at the time of transportation by a vehicle.

In FIGS. 1 to 4, front side covers 90 and 90 covering both left and right side surfaces of the left and right columns 17 and 17, a front cover 91 covering the columns 17 and 17 and the front surface of the handle column 28 and coupling both the front side covers to each other, and the leg shield 7 covering the columns 17 and 17 and the rear surface of the hand column 28 and coupling both the front side covers 90 and 90 to each other are detachably fixed to the left and right columns 17 and 17. Thus, the leg shield 7 is placed so as to overhang laterally outward from the handle column 28 to cover, from the front, both legs of the driver D seated on the seat 6. The width of the leg shield 7 is set shorter than the distance between the inner edges of the left and right movable fenders 35 and 35 so as not to intimidate pedestrians passing by the vehicle as much as possible, as in the case of the floor panel 13. The rear parts of the left and right movable fenders 35 and 35 wider than the leg shield 7 and an auxiliary cover 92 covering a space between the movable fenders 35 and 35 and obliquely extending backward and downward are integrally jointed to the lower end of the leg shield 7. The rear end of the auxiliary cover 92 is bonded to the floor panel 13 by a bolt. Opposite end portions 92a and 92a of the auxiliary cover 92 covering the rear parts of the left and right movable fenders 35 bulges outward in the radial direction of the movable fender 35, and is formed into an arc-shape along the outer periphery of the movable fender 35. The upper surface of the floor panel 13 is covered with a floor mat 14 so as to cover a bonding portion of the auxiliary cover 92. A foot rest portion for the driver D, namely a step floor 15 is formed by the floor panel 13 and floor mat 14.

The auxiliary cover 92 has a width greater than that of the leg shield 7 so as to cover the rear parts of, and an area between, the left and right movable fenders 35 and 35 across the area between the leg shield 7 and the step floor 15, and therefore muddy water or the like leaked from the movable fenders 35 and 35 and splashed backward can be caught by the auxiliary cover 92.

Moreover, since the auxiliary cover 92 is jointed to the lower part of the leg shield 7, pedestrians are not intimidated although its width is greater than that of the leg shield 7.

Further, since the opposite end portions 92a and 92a covering the rear parts of the left and right movable fenders 35 bulge outward in the radial direction of the movable fender 35 and are formed into an arc-shape along the outer periphery of the movable fender 35, gaps between the movable fenders 35 and 35 and the auxiliary cover 92 can sufficiently be secured to avoid interference between the movable fenders 35 and 35 and the auxiliary cover 92 at the time of turning the front wheels 2f and 2f.

Furthermore, since the auxiliary cover 92 is placed between the leg shield 7 and the step floor 15, has a width greater than that of the leg shield 7, and obliquely extends backward and downward, the auxiliary cover 92 can also be used as an auxiliary step on which the driver D can put the foot in a stretched state, thus contributing to an improvement in habitability.

As clearly shown in FIGS. 1 to 3, a pair of left and right headlights 93 and 93 is mounted on the lower part of the front cover 91. A front bumper 106 extending downward of the headlights 93 and 93 to cover the front end portions of the front portions 10a and 10a is mounted on the front cover 91 and the left and right front side covers 90 and 90.

A rear cover 95 covering the power unit 5 and the left and right rear wheels 2r and 2r is fixed to the rear part of the main frame 10, and a tail light 96 is mounted on the rear surface of the rear cover 95.

The driver's seat 6 is constituted by a seat cushion 6a supported by the seat rail 16, and a seat back 6b rising from the rear end portion of the seat cushion 6a. The seat back 6b has support plates 97 and 97 integrally on the left and right side surfaces thereof. A pair of left and right arm rests 98 and 98 is borne on the support plates 97 and 97 such that they can be pivoted between a use position in which they are horizontal and a withdrawal position in which they are raised upward.

Mounted on the frame middle portion 10b and the frame rear portion 10c of the main frame 10 is an L-shaped rear side cover 100 covering these portions and reinforcing the side edge portion of the step floor 15.

In the front wheels 2f and 2f and the rear wheels 2r and 2r, a plurality of reflectors 101 or light emitters extending radially are bonded to the outer side surface of each wheel body 2fa and 2ra. The plurality of reflectors 101 or light emitters on the front and rear wheels 2f and 2r are arranged such that at least some of the reflectors 101 are always close to the ground irrespective of the rotation position of the front and rear wheels 2f and 2r. Thus, on the side surface of the small vehicle V, lower reflectors 101 or light emitters arranged longitudinally are provided at a location close to the ground.

Further, upper reflectors 102 or light emitters are bonded to the side surfaces of the upper end portions of the left and right front side covers 90 and 90 and the side surfaces of the upper parts of the support plates 97 and 97 above the arm rests 98 and 98. Thus, the upper reflectors 102 or light emitters arranged longitudinally are provided on the upper part of the side surface of the small vehicle V.

For the lower and upper reflectors 101 and 102, a metallic coating film, a light-colored grey coating film, a reflection mirror or the like is suitable. If a metallic coating film, particularly a silver metallic coating film is employed, the reflectors 101 and 102 can easily be formed by coating, and the visibility is good because the reflectability of illumination light is relatively high.

As shown in FIG. 10, when light of a headlight is applied from an automobile C on a driveway R toward the small vehicle V of the present invention on a pedestrian crossing Z in the front at night, the lower and upper reflectors 101 and 102 are caught by the eyes of a driver of the automobile C with reflected light. At this time, particularly the lower reflectors 101 are arranged longitudinally at a location on the side surface of the small vehicle V, which is close to the ground, as described previously, and therefore even if the driver (mistakenly) determines an apparent distance L2 between the automobile and the reflectors 101 to be a distance between the automobile and the small vehicle V under the effect of perspective perception, there is no problem because an error between the apparent distance L2 and the actual distance L between the automobile and the small vehicle V is negligible. Therefore, the driver can improve the accuracy of determination of the distance L between the automobile and the small vehicle V from the position of the lower reflectors 101.

Particularly, when the lower reflectors 101 are provided on the front wheels 2f and rear wheels 2r, the lower reflectors 101 are situated at a position in the small vehicle V, which is very close to the ground, and therefore not only the accuracy of determination of the distance by the driver can be improved, but also the rotation of the lower reflectors 101 further intensely attracts the driver's attention.

Thus, owing to an improvement in the visibility of the side surface of the small vehicle V, the driver of the automobile C can be made to more accurately recognize the distance L between the automobile and the small vehicle V on the pedestrian crossing Z.

Since also the upper reflectors 102 arranged longitudinally are provided on the upper part of the side surface of the small vehicle V, the driver of the automobile C can be made to accurately recognize the size of the small vehicle V by reflected light of the upper reflectors 102 and reflected light of the lower reflectors 101, and the visibility of the small vehicle V can be still further improved. Moreover, since a large number of reflectors 101 and 102 exist as described above, the visibility of the side surface of the vehicle is not significantly deteriorated even if some of the reflectors are shielded by something.

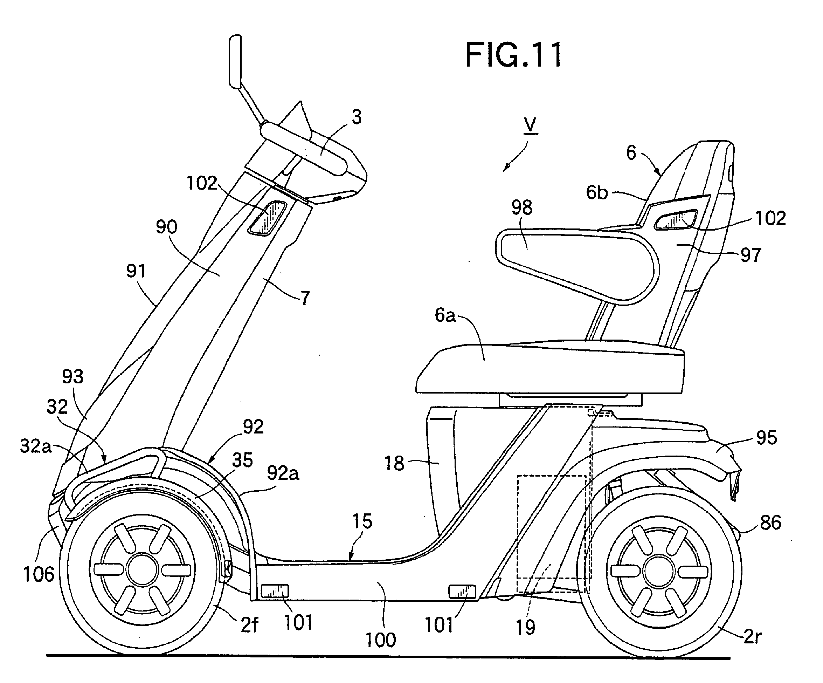

The second embodiment of the present invention shown in FIG. 11 will now be described.

In the second embodiment, for example, the side surface of a horizontal portion of the L-shaped rear side cover 100 reinforcing the side edge portion of the step floor 15 is selected as a portion of the vehicle body of the small vehicle V, which is close to the ground, and a plurality of lower reflectors 101 spaced longitudinally are provided on the side surface. Since the other components are the same as those of the first embodiment, components corresponding to those of the first embodiment are given the same reference symbols in FIG. 11 and overlapping explanations are omitted.

According to the second embodiment, a pair of front and rear lower reflectors 101 provided on a portion of the vehicle body of the small vehicle V, which is close to the ground, does not move with respect to the vehicle body, and therefore the visibility of the side surface of the small vehicle V can be improved by a small number of lower reflectors 101 or light emitters.

The present invention is not limited to the embodiments described above, and various design variations can be made without departing from the subject matter of the invention. For example, the reflectors 101 and 102 may be replaced by light emitters . For the light emitter, a luminous material or a fluorescent material is suitable, and when this material is employed, the visibility is high because light is positively emitted if the light emitter receives illumination light of a headlight of another vehicle or the like.

Further, the small vehicle V may be constructed in the form of a tricycle.

In the second embodiment of FIG. 11, a plurality of reflectors 101 arranged in the longitudinal direction may be replaced by a continuous band.

## Claims

1. A small vehicle (1) such as an electric wheelchair, comprising:
a vehicle body frame (1);
a front wheel (2f) and a rear wheel (2r) suspended on a front part and
a rear part, respectively, of the vehicle body frame (1);
a handle column (28) mounted on the front part of the vehicle body frame (1);
a steering handle (3) which is steerably supported by the handle column (28) and capable of turning the front wheel (2f); and
a step floor (15) formed behind the handle column (28) and on the vehicle body frame (1) and serving as a foot rest portion for a driver;
**characterized in that** the small vehicle further comprises:
a driver's seat (6) supported by the vehicle frame (1) in a rear part of the step floor (15); and
a side cover (100) arranged between the front wheel (2f) and the rear wheel (2r), mounted on the vehicle body frame (1) and provided adjacently to each of side edge portions of the step floor (15),
wherein lower reflectors (101) or lower light emitters are provided at front and rear end portions in a lower end portion of a side surface of a horizontal portion of the side cover (100) which extends longitudinally along the step floor (15),
wherein the lower reflector (101) or lower light emitter on the front side is arranged adjacently to a rear side of each of outwardly bulging,
opposite end portions (92a) of an auxiliary cover (92), the auxiliary cover (92) being joined to a lower end of a leg shield (7) covering a rear surface of the handle column (28) and bonded at a rear end thereof to the step floor (15),
wherein the lower reflector (101) or lower light emitter on the rear side is arranged adjacently to a front side of each of outwardly bulging, opposite end portions of the rear cover (95) covering the rear wheel (2r), and
wherein upper reflectors (102) or upper light emitters are provided at positions higher than a seat cushion (6a) of the seat (6) in side surfaces of left and right front side covers (90) which are connected to left and right sides of the leg shield (7) and in support plates (97) at side surfaces of a seat back (6b) of the seat (6).

## Patentansprüche

1. Kleinfahrzeug, wie etwa ein elektrischer Rollstuhl, welches aufweist:
einen Fahrzeugrumpfrahmen (1);
ein Vorderrad (2f) und ein Hinterrad (2r), die jeweils an einem vorderen Teil und einem hinteren Teil des Fahrzeugrumpfrahmens (1) aufgehängt sind;
eine Lenksäule (28), die am vorderen Teil des Fahrzeugrumpfrahmens (1) angebracht ist;
eine Lenkstange (3), die an der Lenksäule (28) lenkbar gelagert ist und das Vorderrad (2f) drehen kann; und
einen Trittboden (15), der hinter der Lenksäule (28) und auf dem Fahrzeugrumpfrahmen (1) ausgebildet ist und als Fußstellabschnitt für einen Fahrer dient;
**dadurch gekennzeichnet, dass** das Kleinfahrzeug ferner aufweist:
einen Fahrersitz (6), der vom Fahrzeugrahmen (1) am hinteren Teil des Trittbodens (5) getragen ist; und
eine Seitenabdeckung (100), die zwischen dem Vorderrad (2f) und dem Hinterrad (2r) angeordnet ist, am Fahrzeugrumpfrahmen (1) angebracht ist und benachbart jedem von seitlichen Randabschnitten es Trittbodens (15) vorgesehen ist,
worin untere Reflektoren (101) oder untere Lichtemitter an vorderen und hinteren Endabschnitten in einem unteren Endabschnitt einer Seitenfläche eines horizontalen Abschnitts der Seitenabdeckung (100) vorgesehen sind, welcher sich längs entlang dem Trittboden (15) erstreckt,
worin der untere Reflektor (101) oder untere Lichtemitter an der Vorderseite benachbart einer Rückseite von jeweils nach außen gewölbten gegenüberliegenden Endabschnitten (92a) einer Hilfsabdeckung (92) angeordnet ist, wobei die Hilfsabdeckung (92) mit einem unteren Ende eines Beinschilds (7) verbunden ist, das eine Rückseite der Lenksäule (28) abdeckt, und an ihrem hinteren Ende mit dem Trittboden (15) verbunden ist,
worin der untere Reflektor (101) oder untere Lichtemitter an der Rückseite benachbart einer Vorderseite von jedem der nach auswärts gewölbten gegenüberliegenden Endabschnitte einer hinteren Endabdeckung (95) angeordnet ist, welche das Hinterrad (2r) abdeckt, und
worin obere Reflektoren (102) oder obere Lichtemitter in Seitenoberflächen von linken und rechten vorderen Seitenabdeckungen (90), die mit linken und rechten Seiten des Beinschilds (7) verbunden sind, und in Tragplatten (97) an Seitenoberflächen der Sitzlehne (6b) des Sitzes (6) an höheren Positionen angeordnet sind als ein Sitzpolster (6a) des Sitzes (6).

## Revendications

1. Un petit véhicule (1), tel qu'une chaise roulante électrique, comprenant :
un châssis de véhicule (1) ;
une roue avant (2f) et une roue arrière (2r) suspendues respectivement sur une partie avant et sur une partie arrière du châssis de véhicule (1) ;
une colonne de guidon (28) montée sur la partie avant du châssis de véhicule (1) ;
un guidon de direction (3) qui est soutenu, de manière à pouvoir diriger, par la colonne de guidon (28) et est capable de faire tourner la roue avant (2f) ; et
un marchepied (15) formé derrière la colonne de guidon (28) et sur le châssis du véhicule (1) et servant de partie repose-pieds pour un conducteur ;
**caractérisé en ce que** le petit véhicule comprend par ailleurs :
un siège de conducteur (6) soutenu par le châssis de véhicule (1) dans une partie arrière du marchepied (15) ; et
un cache latéral (100) disposé entre la roue avant (2f) et la roue arrière (2r), monté sur le châssis de véhicule (1) et disposé de manière adjacente à chacune des parties de bord latérales du marchepied (15),
dans lequel des réflecteurs inférieurs (101) ou des émetteurs de lumière inférieurs sont prévus aux parties d'extrémité avant et arrière dans une partie d'extrémité inférieure d'une surface latérale d'une partie horizontale du cache latéral (100) qui s'étend longitudinalement le long du marchepied (15) ;
dans lequel le réflecteur inférieur (101) ou l'émetteur de lumière inférieur du côté avant est disposé de manière adjacente à un côté arrière de chaque partie d'extrémité opposée formant un renflement vers l'extérieur (92a) d'un cache auxiliaire (92), le cache auxiliaire (92) étant relié à une extrémité inférieure d'une protection de jambe (7) couvrant une surface arrière de la colonne de guidon (28) et étant soudée à une extrémité arrière de celle-ci au marchepied (15),
dans lequel le réflecteur inférieur (101) ou l'émetteur de lumière inférieur du côté arrière est disposé de manière adjacente à un côté avant de chacune des parties d'extrémité opposées, formant un renflement vers l'extérieur du cache arrière (95) couvrant la roue arrière (2r), et
dans lequel des réflecteurs supérieurs (102) ou émetteurs de lumière supérieurs sont prévus dans des positions supérieures à un coussin de siège (6a) du siège (6) dans les surfaces latérales des caches latéraux avant gauche et droit (90) qui sont reliés aux côtés gauche et droit de la protection de jambe (7) et dans des plaques de support (97) sur les surfaces latérales d'un dossier de siège (6b) du siège (6).
